# EUROPEAN PATENT SPECIFICATION

(11) **EP 1 766 127 B1**
(45) Date of publication and mention of the grant of the patent: **17.10.2012**
(21) Application number: 05708158.0
(22) Date of filing: 07.02.2005
(51) Int. Cl.: D21C 3/28, D21C 11/00

(54) **A METHOD TO DESTABILIZE FOAMS AND TO PREVENT FOAMING OF FATTY ACID AND/OR RESIN ACID SOAP CONTAINING LIQUIDS**
VERFAHREN ZUR ENTSTABILISIERUNG VON SCHAUM UND ZUR SCHAUMVERHÜTUNG BEI FETTSÄURE- UND/ODER HARZSÄURESEIFEN ENTHALTENDEN FLÜSSIGKEITEN
PROCEDE DE DESTABILISATION DE MOUSSES ET PERMETTANT D'EVITER LA TRANSFORMATION EN MOUSSE DE LIQUIDES CONTENANT UN SAVON A ACIDES GRAS ET/OU A ACIDES DE RESINE

(30) Priority: 06.02.2004 FI 20040188
(43) Date of publication of application: 28.03.2007
(73) Proprietor: Helsinki University of Technology, 02015 Hut (FI)
(72) Inventor: PIRTTINEN, Esa, FI-02260 Espoo (FI); STENIUS, Per, S-18432 Akersberga (SE); VUORINEN, Tapani, FI-02200 Espoo (FI)
(74) Representative: Papula Oy
(86) International application number: PCT/FI2005/000078
(87) International publication number: WO 2005/075730

(56) References cited:
- WO-A1-2004/050987
- US-A- 2 442 768
- US-A- 4 339 342
- DATABASE WPI Week 199243, Derwent Publications Ltd., London, GB; AN 1992-356578, XP003007910 & SU 1 696 632 A1 (KOTLASS CELLULOSE PAPER COMBINE) 07 December 1991

## Description

The object of the invention is to reduce foaming of liquids that contain dissolved or colloidal fatty acid soap and/or resin acid soap, such as black liquor.

Softwood contains pitch. In kraft cooking the esterified resin and fatty acids are released as free fatty and resin acid soaps. Fatty and resin acid soaps are dissolved in alkaline solution and they form micelles in so-called critical micellation concentration (cmc). A liquid containing micelles is highly foaming when air or other gas is mixed in the liquid. The micelles of fatty acid and resin acid soaps can solubilize some amount of neutral substances which are insoluble in water. When black liquor is cooled down the solubility of fatty acid and resin acid soap is decreased and the soap is precipitated. The precipitated soap particles agglomerate and rise to the top of the black liquor tank. Micelles and the soap particles form a stable foam.

The foaming of liquids can be reduced by removing the surface active agents from it. The foaming is at highest when the concentration is just under cmc. The mechanism of the stabilization of foams are in literature known Gibbs-Marangon phenomenon. The foaming will stop when the concentration of surface active agent is so low that the enrichment to the surface is low. This means that the concentration of the surface active agent is less than 0.1 x cmc. Because the cmc's are low, so usually the defoamers are based on to destabilize already formed foams.

The separation of soap is dependent on the extractives of the wood, rising velocity of the precipitated soap particles and the flow of the black liquor in the tank. The rising velocity of the soap particles depends on the particle size, density, the solids of the black liquor and the temperature of the black liquor. All soap can not be recovered because part of it is dissolved in black liquor and some part of the particles have too small diameter. For very small particles the rising velocity is too low. The precipitation takes place when the solubility of the extractives is reduced, which occurs when the temperature of black liquor is lowered, salt concentration and solid concentration are increased.

Unseparated soap can be dissolved or remain as colloidal particles in black liquor. Soap is harmful for the processes in pulp mill. One of the most serious harms is that the dissolved and colloidal soap causes increasing foam formation and stability. The foams are controlled using foam tanks and adding defoamers to the process. The foam tanks and defoamers are described in the patent publications: US 4 088 638 and US 6 582 601 and defoamers in patents GB 639 673, US 6 605 183, US 4 107 073, US 3 666 681, EP 0 687 725, CA 2 151 005, CA 1 099 859, WO 9735067, JP 7-289803 and GB 1 468 896.

Many synthetic defoamers have harmful effects like the separation of soap decreases, stability of foam increases, efficiency of waste water treatment decreases, defoamers cause precipitations and runnability problems in paper machine and weakening of printability of the paper.

The aim of the invention is to provide a new solution to prevent foaming. The invention is based on the earlier observation about the effect of neutral substances on the separation of soap. The observation is described in patent application FI 20022155. The aim of this method is to change the dissolved fatty acid and resin acid soap molecules and the micelles of those molecules to the liquid crystal phase. Liquid crystal phase is lighter than water and it rises to the surface of the black liquor where it can be separated. The very low concentration of free dissolved fatty acid and resin acid soaps seems to be the reason why the method reduces the foaming of the black liquor. Synthetic defoamers may stabilize colloidal in black liquor. Thus the amount of colloidal soap in black liquor is reduced and soap separation efficiency is improved when the use of synthetic defoamers can be minimized.

Colloidal substances in foam increase the stability of the foam. The used neutral substances in colloidal form were found out to collapse the stability of the foam. This was surprising because Friberg has shown in articles [1,2] that liquid crystal particles do stabilize foams. The reason for the reduced stability of foam in this invention seems to be the ability of the neutral substances to change the free molecules to the liquid crystal phase described in the patent application FI 20022155.

To achieve the aims of the invention described above it is characterised by what is presented in the patent claim no 1.

The method of this invention can be used depending on the place of dosage spot in the process to prevent foaming or to reduce the stability of the foam. According to the method of the invention foaming of the black liquor is reduced by adding stabilized colloidal neutral substances to the black liquor. The neutral substances can be produced by separating it from the soap recovered from pulp mill. Useful material containing suitable neutral substances may exist in the processes of forest industry. Thus the refining of the neutrals may not be needed for this purpose.

In this description of the invention there are used terms fatty acid and resin acid in the meaning including fatty acid sodium soap and resin acid sodium soap.

It has been proved experimentally that only relatively small amount of colloidal neutral substances are needed to change the dissolved mixed micelles to liquid crystal phase. The needed amount of colloidal neutral substances is preferably in the range of 0.01 - 4 % of the amount of dissolved fatty acid and resin acid in the black liquor. The formation of two separate phases is a consequence of the neutral substance, which change the micelles containing system to insoluble liquid crystal particles. In micelles the fatty acid soap and resin acid soap molecules may relatively freely move from a micelle to the liquid and to the other micelle. When the amount of neutral substances exceeds the critical amount, the fatty acid and resin acid precipitate as liquid crystal particles. The liquid crystal particles join to each other, which leads to the increased particle size and to fast separation of the liquid crystal phase. During and after this phenomenon the foaming of the black liquor or other fatty and/or resin acid containing liquid is significantly reduced.

In use of this invention the soap is separated and the foaming is prevented in chosen unit process by choosing the suitable dosage spot. The size of the separation tanks and foam tank can be reduced when the separation process of the soap is improved at the same time when foaming of the black liquor is reduced. Alternatively the amount of remaining soap in the process can be reduced by improving the recovery of the soap before black liquor evaporators. Thus the disturbance caused by the soap in evaporation process can be minimized and the evaporation process can be made more effective.

The antifoaming liquid or in other words colloidal neutral substances containing defoamer can be mixed in to black liquor or they can be dosed to the top of the foam like a traditional defoamer.

The invention is described further using the following examples and illustrated with figures, which are based on the laboratory results.

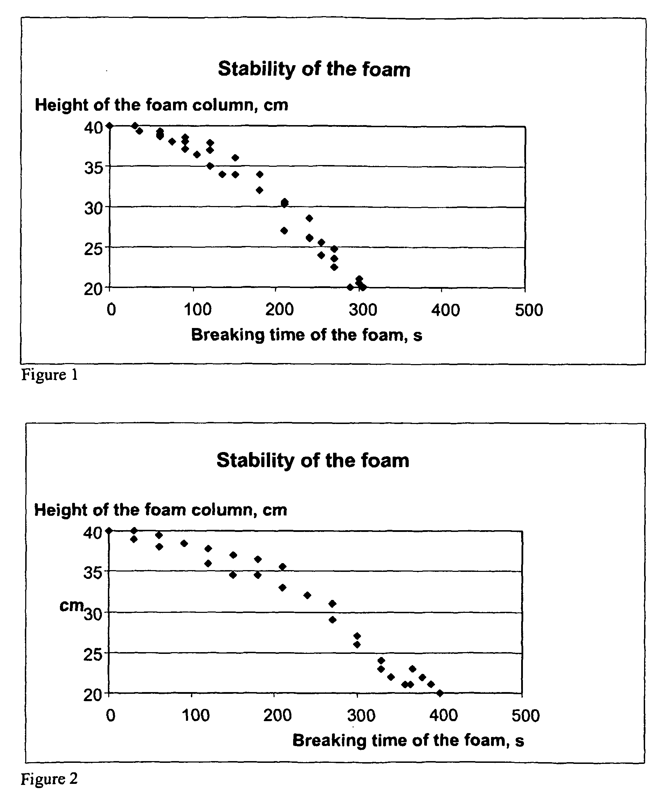

Figure 1 is a graphic illustration about the stability of foam at 80 °C in Bikerman foaming test tube.
Figure 2 is a graphic illustration about the stability of foam at 80 °C in Bikerman foaming test tube when 0.5 % fatty acid and resin acid soap mixture (1:1) is added to increase the foaming and to increase the stability of the foam.

Example 1. Black liquor from pulp mill containing 0.5 g/l soap was tested using Bikerman foaming test tube. The tube was tempered with water circulation to 80 °C. Black liquor was mixed vigorously with magnetic stirrer and 70 - 80 ml/min nitrogen gas flow was led into the liquid. When the foaming started the mixing speed was adjusted to 150 rpm. Foaming was determined by measuring the time when the height of the foam exceeded 40 cm maximal height. The stability of the foam was determined by measuring the half-life of the 40 cm foam column. The foam exceeded the maximal height in 4 min 7 s time. The result was an average of three experiments. Half-life of the foam column was 5 min.

Example 2. The same black liquor as in example 1 was used. Neutral substances were emulsified and added in the black liquor so that the amount of neutrals was 0.04 % (w/w) in the black liquor. Foaming experiment was performed. The maximal 40 cm height was not achieved at all. The maximal height of the foam column was 15 cm. The foam was very unstable so that the half-life of the foam column was only some seconds.

Example 3. More foaming black liquor was prepared by adding 10 % soap solution to the same black liquor, which was used in example 1. The soap solution was made by dissolving sodium oleate (NaOl) and sodium abietate (NaAb) in ratio (1:1) to 0.1 M NaOH solution at 80 °C. Black liquor and the soap solution were mixed with Vortex mixer so that the added amount of soap in the black liquor was 0.5 g/l. The effect of addition of the soap to the foaming was insignificant. The maximal 40 cm height of the foam column was achieved in 4 min 55 s and the half-life of the foam was 6 min 40 s.

Example 4. The same experiment than in example 3 was performed but this time 0.02 % emulsified neutral substances were added to the black liquor. The maximal height of the foam was 15 cm and it was unstable. The half-life of the foam was only some seconds.

### References

[1] Friberg, S., Saito, H., "Foam stability and association of surfactants", Swed. Inst. Surf. Chem., Foams Proc. Symp. (1976)
[2] Saito, H., Friberg, S., "Lyotropic liquid crystals and foam stability", Liq. Cryst., Proc. Int. Conf. (1975)

## Claims

1. A method to reduce foaming of liquids that contain dissolved or colloidal fatty acid soap and/or resin acid soap, **characterised in that** colloidal neutral substances, which are of origin from a pulp mill process and which have been stabilized using fatty acid soap and/or resin acid soap, are added to the foaming liquid to such an amount which is enough to change most of the fatty acid soap and resin acid soap micelles to liquid crystal phase.

2. Method according to claim 1, **characterised in that** the amount of dosage of colloidal neutral substances is chosen according to how much the foaming liquid contains dissolved fatty acid soap and/or resin acid soap.

3. Method according to claim 1 or 2, **characterised in that** the foaming liquid is black liquor of a pulp mill.

4. Method according to one of the aforementioned claims, **characterised in that** the colloidal neutral substances are added to the foaming liquid using an effective mixer.

5. Method according to one of claims 1-3, **characterised in that** the colloidal neutral substances are added to the top of the foaming liquid.

6. Method according to claim 5, **characterised in that** colloidal neutral substance powder is added to the top of the foaming liquid.

7. Method according to one of the aforementioned claims, **characterised in that** the colloidal neutral substances are added an amount which is 0.01-4 % of the amount of dissolved fatty acid soap and/or resin acid soap.

## Patentansprüche

1. Verfahren zur Schaumverringerung von Flüssigkeiten, die eine gelöste oder kolloidale Fettsäureseife und/oder Harzsäureseife enthalten,
**dadurch gekennzeichnet, dass**
die kolloidalen neutralen Substanzen, die aus einem Zellstoffprozess herrühren und die mit Fettsäureseife und/oder Harzsäureseife stabilisiert wurden, zu der schäumenden Flüssigkeit in einer Menge hinzugefügt werden, die ausreichend ist, um die meisten Fettsäureseife- und Harzsäureseife-Mizellen in die Flüssigkristallphase umzuwandeln.

2. Verfahren gemäß Anspruch 1,
**dadurch gekennzeichnet, dass**
die Dosierungsmenge der kolloidalen neutralen Substanzen demgemäß ausgewählt wird, wie viel gelöste Fettsäureseife und/oder Harzsäureseife die schäumende Flüssigkeit enthält.

3. Verfahren gemäß Anspruch 1 oder 2,
**dadurch gekennzeichnet, dass**
die schäumende Flüssigkeit Schwarzlauge eines Zellstoffes ist.

4. Verfahren gemäß einem der vorhergehenden Ansprüche,
**dadurch gekennzeichnet, dass**
die kolloidalen neutralen Substanzen zu der schäumenden Flüssigkeit mit einem leistungsfähigem Mixer hinzugefügt werden.

5. Verfahren gemäß einem der Ansprüche 1 bis 3,
**dadurch gekennzeichnet, dass**
die kolloidalen neutralen Substanzen oben auf die schäumende Flüssigkeit hinzugegeben werden.

6. Verfahren gemäß Anspruch 5,
**dadurch gekennzeichnet, dass**
kolloidales neutrales Substanzpulver oben auf die schäumende Flüssigkeit hinzugegeben wird.

7. Verfahren gemäß einem der vorhergehenden Ansprüche,
**dadurch gekennzeichnet, dass**
die kolloidalen neutralen Substanzen in einer Menge hinzugefügt werden, die
0,01 - 4 % der Menge der gelösten Fettsäureseife und/oder Harzsäureseife beträgt.

## Revendications

1. Procédé de réduction de la formation de mousse de liquides qui contiennent un savon à acide gras et/ou un savon à acide de résine dissous ou colloïdal, **caractérisé en ce que** les substances neutres colloïdales qui proviennent d'un traitement dans une usine de pâte à papier et qui ont été stabilisées en utilisant savon à acide gras et/ou de savon à acide de résine, sont ajoutées au liquide moussant en une quantité qui est suffisante pour changer la majeure partie des micelles du savon à acide gras et du savon à acide de résine en phase cristalline liquide.

2. Procédé selon la revendication 1, **caractérisé en ce que** la quantité de dosage des substances neutres colloïdales est choisie en fonction de la quantité de savon à acide gras et/ou de savon à acide de résine dissous, contenu dans le liquide moussant.

3. Procédé selon la revendication 1 ou 2, **caractérisé en ce que** le liquide moussant est une liqueur noire d'une usine de pâte à papier.

4. Procédé selon l'une des revendications mentionnées précédemment, **caractérisé en ce que** les substances neutres colloïdales sont ajoutées au liquide moussant en utilisant un mélangeur efficace.

5. Procédé selon l'une des revendications 1 à 3, **caractérisé en ce que** les substances neutres colloïdales sont ajoutées sur le dessus du liquide moussant.

6. Procédé selon la revendication 5, **caractérisé en ce que** de la substance neutre colloïdale en poudre est ajoutée sur le dessus du liquide moussant.

7. Procédé selon l'une des revendications mentionnées précédemment, **caractérisé en ce que** les substances neutres colloïdales sont ajoutées en une quantité qui est de 0,01 à 4 % de la quantité de savon à acide gras et/ou de savon à acide de résine dissous.
